# EUROPÄISCHE PATENTSCHRIFT

(11) **EP 4 168 627 B1**
(45) Veröffentlichungstag und Bekanntmachung des Hinweises auf die Patenterteilung: **03.01.2024**
(21) Anmeldenummer: 21721821.3
(22) Anmeldetag: 19.04.2021
(51) Int. Cl.: E01B 35/00, B61L 23/04, B61L 25/02, G01B 21/30, G01S 19/43, G01S 19/14, G01S 19/51

(54) **VERFAHREN ZUM VERMESSEN EINER GLEISLAGE**
METHOD FOR GAUGING A TRACK POSITION
PROCÉDÉ DE JAUGEAGE D'UNE POSITION DE VOIE

(30) Priorität: 18.06.2020 AT 505202020
(43) Veröffentlichungstag der Anmeldung: 26.04.2023
(73) Patentinhaber: HP3 Real GmbH, 1130 Wien (AT)
(72) Erfinder: LICHTBERGER, Bernhard, 1030 Wien (AT)
(74) Vertreter: Hübscher & Partner Patentanwälte GmbH
(86) Internationale Anmeldenummer: PCT/AT2021/060129
(87) Internationale Veröffentlichungsnummer: WO 2021/253062

(56) Entgegenhaltungen:
- EP-A1- 3 358 079
- WO-A1-2016/090401

## Beschreibung

### Technisches Gebiet

Die Erfindung bezieht sich auf Verfahren zum Vermessen einer Gleislage mit einem gleisfahrbaren Gleismesswagen, wobei eine Messfahrt mit dem gleisfahrbaren Gleismesswagen, einer GPS-Antenne und einem RTK-GPS Empfänger, der mit einem RTK-Korrekturdatendienst kommuniziert, durchgeführt wird, wobei wenigstens ein Rad des Gleismesswagens an eine Schiene angepresst wird.

### Stand der Technik

Die meisten Gleise für die Eisenbahn sind als Schotteroberbau ausgeführt. Durch die Radkräfte der darüberfahrenden Züge werden unregelmäßige Setzungen im Schotter und Verschiebungen der seitlichen Lagegeometrie des Gleises hervorgerufen. Durch die Setzungen des Schotterbettes treten Fehler in der Höhe, der Überhöhung (im Bogen) und der Richtung auf. Werden bestimmte Komfortgrenzwerte oder Sicherheitsgrenzwerte dieser geometrischen Größen überschritten, dann werden Instandhaltungsarbeiten notwendig.

Die Behebung und Berichtigung geometrischer Gleisfehler wird mit Gleisbaumaschinen durchgeführt. Für die Qualität der Gleislage nach der Verbesserung durch Oberbaumaschinen oder sonstiger Methoden sind Abnahme- und Freigabetoleranzen festgelegt. Diese stellen die Anforderungen der Qualität der erzeugten geometrischen Verbesserungen dar.

Die dabei zu nennenden wichtigen zu berichtigenden und aufzuzeichnenden Größen sind die Verwindung, die Längshöhe des Gleises, die Richtung oder Seitenlage des Gleises, und die Querneigung oder Überhöhung des Gleises.

Für die heutigen Hauptstrecken werden die Gleise absolut vermarkt. Dazu werden Festpunkte an Masten befestigt und der Sollabstand und die Sollhöhe des Gleises festgelegt. Zwischen diesen so definierten Stützpunkten wird in der Gleisachse eine Gerade definiert (Langsehne) und die Soll-Lage des Gleises zwischen den Masten in Abständen von ca. 5m bezüglich der Höhe und des seitlichen Abstandes der Gleisachse definiert (Soll-Pfeilhöhen, Soll-Längshöhen). Das Soll-Krümmungsbild, die Soll-Neigungswechsel und die Soll-Überhöhung des Gleises, sowie die Festpunktdaten an den Masten (Gleisabstand, Gleishöhe) werden üblicherweise von der Eisenbahn erstellt und der ausführenden Instandhaltungsfirma zur Verfügung gestellt. Beispielsweise vor einer Durcharbeitung und Berichtigung der Gleisanlage mittels einer Gleisstopfmaschine muss zuvor die Ist-Lage des Gleises gemessen werden. Dazu wird bei den Masten der Ist-Abstand und die Ist-Höhe des Gleises zu den Festpunkten mittels spezieller Messeinrichtungen (Festpunktmessgeräte, Totalstationen etc.) ermittelt. Daraus wird durch Differenzbildung zwischen Soll- und Istdaten die Lage- und Höhenabweichung bei den Masten bestimmt. Zusätzlich müssen die Abweichungen der Soll- zur Ist-Gleislage basierend auf der Langsehne alle 5m bestimmt werden. Dazu gibt es verschiedene Messverfahren wie z.B. den EMSat (eine zweiteilige Maschine - die Hauptmaschine trägt einen Laserempfänger und eine Festpunktmesseinheit, die vorlaufende Maschineneinheit den Laser). Der EMSat verwendet zur Langsehnenaufmessung eine Laserlangsehne und zur Bestimmung der Abweichungen an den Masten ein Festpunktmessgerät.

Aus der EP1028325 ist ein Verfahren bekannt, welches einen EMSat mit einer GPS-Messeinrichtung einsetzt. Dabei wird mittels eines GPS-Empfängers die relative Position des stationären Gleismesswagens (der den Laser für die Langsehnenmessung trägt) in Bezug auf eine, in einem terrestrischen Koordinatensystem bekannte, dem auf zu messenden Gleisabschnitt benachbarte, örtlich fest installierte GPS-Referenzstation ermittelt.

In der US4812991 wird ein Verfahren und eine Vorrichtung zur raschen und genauen Bestimmung der koordinatenmäßigen Position eines bewegbaren Empfängers relativ zu einem fix installierten Empfänger beschrieben. Nähere Details zu den genannten Verfahren sind auch in einem Artikel "Stand der Langsehnenvermessung mittels EM-SAT oder GPS" in der Fachzeitung "Der Eisenbahningenieur" 46 (1995) 8, Seiten 560 bis 563 beschrieben. Bei der Deutschen Bahn gibt es ca. 1,2 Millionen Festpunkte die vorwiegend an Masten angebracht sind. Die deutsche Bahn hat längs ihrer Strecken GPS-Referenzpunkte eingerichtet (System DBRef Basisabstand ca. 4km). Durch den Einsatz von GPS-Referenzpunkten und ein entsprechendes Verfahren können diese 1,2 Millionen Festpunkte durch ca. 7.000 eingemessene GPS-Referenzpunkte ersetzt werden. Es stellt einen großen Aufwand dar, 1,2 Millionen Festpunkt zu warten, auch die Messung der Ist-Differenzen der Gleislage zu diesen Festpunkten ist aufwendig und teuer. Nähere Informationen liefert der Artikel "Satellitengestützte Gleisvermessung auch beim Oberbau" in der Fachzeitung "Der Eisenbahningenieur" 58 (2007) 6, Seiten 9 bis 13.

Die Genauigkeit von "normalen" GPS-Messungen liegt in der Größenordnung von Metern. Mit dem so genannten Differential GPS kann die Genauigkeit in dem Submeterbereich gesteigert werden. Das ist für Gleisgeometrieanwendungen noch immer zu ungenau. Bekannt sind virtuelle GPS-Korrekturdatendienste die Real Time Kinematik (RTK)-Korrekturdaten an geeignete GPS-Empfänger senden. Dadurch wird nur ein bewegtes GPS-gestütztes sich auf dem Gleis bewegendes Messfahrzeug benötigt. RTK-GPS hat den Vorteil, dass es mit Hilfe von RTK-Korrekturdaten sehr präzise den absoluten Ort bestimmen kann (ca. 5mm in der Lage und 10-15mm in der Höhe). Je mehr Satelliten und Satellitensysteme gleichzeitig durch einen GPS-Empfänger empfangen werden, umso genauer sind die Ergebnisse. Moderne Satellitenempfänger empfangen und verwerten gleichzeitig die Satellitensysteme GPS, GLONASS, GALILEO, BeiDou, QZSS, IRNSS und SBAS. Sie können Daten zum Korrekturdienst schicken und auf einem zweiten Kanal die Korrekturdaten empfangen. Die Genauigkeit im Bereich von 5-15 mm ist für die Berechnung von Korrekturwerten für eine Gleisstopfmaschine für Hebung bzw. Richtung zu ungenau, aber sie ist ausreichend, absolute Bezugspunkte der Gleisgeometrie zu definieren

Zur Berichtigung von Gleisfehlern haben sich verschiedene Gleisrichtverfahren herausgebildet. Es gibt Relativverfahren die die Gleislage nur glätten und Absolutverfahren. Bei den Absolutverfahren werden die Gleislagen nach vorgegebenen vermarkten Sollgeometrien berichtigt. Die Sollgeometrien der Eisenbahngleise stehen als Gleislagepläne zur Verfügung und können nach Eingabe in den Steuercomputer der Oberbaumaschine zur Berechnung der systematischen Fehler unter Kenntnis des Verhaltens der Messsysteme benutzt werden. Sind die absoluten Korrekturwerte für das vordere Ende der Maschinenmesseinrichtung bekannt, dann wird das vordere Ende der Maschinenmesseinrichtung auf der Sollkurve geführt und das hintere Ende auf dem bereits berichtigten Gleis. An der Arbeitsstelle werden der Richtvorgang und Hebevorgang durchgeführt. Die Position der Stopfmaschine in der Gleislängsachse wird mit einem Odometer bestimmt.

Ist die Sollgeometrie unbekannt, dann wird mit bekannten Verfahren die Gleislage mit einem Sehnensystem für die Richtung und einem Sehnensystem für die Längshöhe vor der Arbeit gemessen. Die Quer-Ist-Neigung wird dabei mit einem Pendel erfasst. Die Messung der Gleislage über Sehnensysteme ist mit einer Übertragungsfunktion behaftet, d.h. das gemessene Signal weicht vom tatsächlichen Gleisfehler hinsichtlich seiner Form, Verstärkung und Phasenlage ab. Die Messwerte sind den Krümmungen des Gleises ähnlich. Die Messung der Höhenlage des Gleises mittels eines Sehnenmesssystems liefert ebenfalls eine mit einer Übertragungsfunktion behaftete krümmungsproportionale Signale (Längshöhenverlauf). Neigungswechsel (Übergang von einer Neigung in eine andere) können aus den Messdaten nicht ermittelt werden, da zwischen Längshöhenfehlern (gemessen auf der Basis einer Sehne) der Gleislage und zwischen Neigungsübergängen die sich ebenfalls als Längshöhendifferenz bemerkbar machen nicht unterschieden werden kann. Zudem ist aus den Längshöhenmessungen der Höhe kein Rückschluss auf die tatsächliche Neigung möglich (die Maschine steht in einem bestimmten Gefälle kann aber diese nicht aus den Messungen ableiten, da das gesamte Messsystem in der Neigung steht und nur eine Relativmessung durchführt).

Für die Optimierung der Gleislage nach den bekannten üblichen Verfahren werden die gemessenen Pfeilhöhen und Längshöhen zu einer Soll-Pfeilhöhenkurve und einer Soll-Längshöhenkurve geglättet. Dann wird die Differenz zwischen dem gemessenen und dem geglätteten "Soll-Pfeilhöhenbild" und dem "Ist-Pfeilhöhenbild" (bzw. dem "Soll-Längshöhenbild" und Ist-Längshöhenbild") gebildet. Mittels digitaler Filter wird eine genäherte inverse Übertragungsfunktion errechnet (siehe z.B. DE10337976B4). Diese inverse Übertragungsfunktion wird nun auf die Differenz zwischen den gemessenen "Ist-Lagebildern" und dem geglätteten "Soll-Lage-Pfeilhöhenbild" und dem "Soll-Lage-Längshöhenbild" angewendet. Dadurch erhält man näherungsweise die Gleisfehler in Höhe und Richtung. Bei der Längshöhe ergibt sich im Gegensatz zur Richtung ein weiterer Bearbeitungsschritt, da nur gehoben und nicht abgesenkt werden kann. Der sich aus der Optimierung ergebende Hebe-Senk-Verlauf muss positiv definit werden. Dazu werden die Hebekorrekturen so angehoben, dass keine negativen Werte (Senkungen) auftreten. Diese Berechnungen sind deswegen schwierig und ungenau, weil von Pfeilhöhen- und Längshöhenbildern die mit Sehnen gemessen wurden ausgegangen wird und die Übertragungsfunktionen komplexe Funktionen sind.

Stand der Technik sind Sehnenmesssysteme und Pendel oder Neigungsmesser zum Messen der Längshöhe, der Richtung und der Querneigung. Stand der Technik sind Odometer zur Bestimmung der Position des Messsystems auf dem Gleis. Stand der Technik sind Satellitennavigationssysteme (wie GPS, GLONASS, BeiDou oder Galileo). Stand der Technik sind Trägheitsnavigationssysteme (INS) oder inertiale Navigationssysteme, die aus einer zentralen Sensoreinheit mit meist drei Beschleunigungs- und Drehratensensoren bestehen. Durch Integration der von der IMU (inertiale Messeinheit) gemessenen Beschleunigungen und Drehraten werden in einer INS laufend die räumliche Bewegung des Fahrzeugs und daraus die jeweilige geografische Position bestimmt. INS-Systeme arbeiten mit Datenraten von etwa 100-1000 Hz und hohen Genauigkeiten und geringer Drift (< 0,01° bis 0,05°/Stunde). Sie kalibrieren sich in Pausen, wenn sie nicht bewegt werden automatisch. Der Hauptvorteil eines INS ist, dass dieses referenzlos betrieben werden kann. Die Beschleunigung kann mittels fahrzeugfester Beschleunigungssensoren ("strap-down") gemessen werden. Natürlich kann prinzipiell auch nur eine IMU eingesetzt werden, in diesem Falle muss der absolute Rollwinkel durch einen unabhängigen Neigungsmesser gemessen werden. Vorteile dieser Messsysteme sind unabhängig von der Zentrifugalbeschleunigung messbare Rollwinkel, eine in weiten Bereichen geltende Übertragungsfunktion des Systems von Verstärkung=1, d.h. es wird die tatsächliche Spur des Fahrzeuges im Raum gemessen ohne Verzerrungen der Form, der Verstärkung bzw. der Phasenlage der Gleisfehler. Aus dieser dreidimensionalen Spur des Fahrzeuges im Raum und einer äquidistanten Messung über Odometer werden 3D-Koordinaten gewonnen. Durch Projektion auf die xy-Ebene erhält man das Ortsbild des Gleises und die Projektion auf die yz-Ebene ergibt den Höhenschnitt. Zusätzlich können Satellitennavigationsdaten (z.B. über GPS) aufgezeichnet werden. Stand der Technik sind auch so genannte "Nord"-basierte INS-Systeme, die absolute Winkelabweichungen des Roll-, Gier- und Nickwinkels bezogen auf ein nach Nord ausgerichtetes System liefern. Der x-Einheitsvektor zeigt dabei nach Norden, der z-Einheitsvektor in Richtung der Schwerkraft und der y-Einheitsvektor ist dann so ausgerichtet, dass sich ein Orthonormalsystem ausbildet. Die absoluten Winkelabweichungen stellen einen Einheitsvektor dar der die Richtung des Messwagens auf welchem sich das INS-System befindet zeigt.

Die EP3358079A1 zeigt ein Verfahren zur Optimierung einer Gleislage und zur Führung einer gleisfahrbaren Gleisbaumaschine mit Odometer zur Messung einer Bogenlänge und inertialer Navigationseinheit, bei dem bei einer Messfahrt mit dem Gleismesswagen die Bogenlänge mit dem Odometer und die Winkellage der inertialen Navigationseinheit gegenüber einem kartesischen Bezugskoordinatensystem gemessen und abgespeichert wird wonach durch die Koordinatenpunkte eine mittels mathematischer Verbindungsfunktionen bestimmte Kurve gelegt wird.

Auch die WO2016090401A1 zeigt einen Gleismesswagen zur Messung der Höhenlage, der Richtung und der Überhöhung der Schienen eines Gleises und einer Kalibriervorrichtung, wobei Kalibrieranschläge mit einem Stelltrieb aus einer Ruhelage in eine Kalibrierlage verlagert werden und die Werte an Gleislagemesssensoren ausgelesen und als Kalibrierwert in die Messanlage eingelesen und abgespeichert werden.

Nachteilig bei den bekannten Verfahren ist, dass mittels geeigneter Messeinrichtungen eine aufwendige Vermessung der Ist-Gleislage auf der Basis einer Langsehne und der Absolutlage der Ist-Gleislage zu Festpunkten an Masten stattfinden muss. Dazu muss die Sollgeometrie des Gleises definiert und bekannt sein. In vielen Ländern ist die absolute Lage der Gleise aber nicht definiert. Berechnet man durch Messung mit einer inertialen Messeinheit die Soll-Gleislage aus der aus den Messungen berechneten Raumkurve dann kann diese zwar beispielsweise bei der nächsten Instandhaltungsarbeit mit einer Stopfmaschine als Referenz genommen werden, allerdings kann die Gleislage nicht bezüglich einer absoluten Referenz wiederhergestellt werden, da diese unbekannt ist. Außerdem wirken sich bei sehr langen Messfahrten die Driften der IMU nachteilig auf die Genauigkeit der Lage aus. Referenzpunkte an Masten sind zahlreich und bedürfen einer aufwendigen und kostspieligen Wartung.

### Darstellung der Erfindung

Der Erfindung liegt somit die Aufgabe zugrunde, ein Verfahren zum Vermessen einer Gleislage unter Berücksichtigung von Randbedingungen wie Zwangslagen, Zwangspunkten und maximal zulässigen Gleislagekorrekturen so weiterzuentwickeln, dass die Nachteile der Driften eines inertialen Messsystems bei langen Messfahrten und die nur Relativangaben der Gleislage vermieden werden.

Es ergibt sich zusätzlich durch das erfindungsgemäße Verfahren der Vorteil, dass die Lage der Neigungswechsel und die absoluten Neigungen (Soll-Neigungswechsel) und die Gleisrichtung (Soll-Krümmungsbild) exakt bestimmbar sind und die Bogenhauptpunkte (wie Übergangsbogenanfang, Bogenanfang, Bogenende, Übergangsbodenende, Position der Neigungswechsel etc.) und andere interessierende Punkte in absoluten GPS-Koordinaten angebbar sind. Dies ergibt den weiteren Vorteil, dass bei einer späteren neuerlichen Instandhaltungsarbeit mit einer Stopfmaschine, das Gleis wieder in die definierte absolute Lage zurückgebracht werden kann. Erfindungsgemäß ergibt sich auch der Vorteil, dass bei mehreren notwendigen Stopfgängen (lagenweiser Einbau gereinigten oder Neuschotters) gleichzeitig während der Arbeit eine Messung erfolgen kann und diese GPS- und Inertialmessungen zur Bestimmung der notwendigen weiteren Hebe- und Richtkorrekturwerte herangezogen werden können. Damit entfällt ein erheblicher Aufwand und Zeitbedarf für die sonst notwendige Zwischenmessung.

Die Erfindung löst die gestellte Aufgabe dadurch, dass die Lage der GPS-Antenne bezüglich einer Referenzachse des Gleises mit Hilfe eines Kompensationsscanners und einer Recheneinheit bestimmt und die gemessenen, in kartesische Koordinaten umgerechneten GPS-Koordinaten mit der Recheneinheit als Raumkurve aufgezeichnet werden, aus der das Ortsbild, aus dem ein Soll-Krümmungsbild und das Längsbild, aus dem ein Soll-Längsneigungsbild errechnet wird, gebildet werden und dass auf dem Messwagen ein Inertialsystem aufgebaut ist, mit dem eine Korrekturraumkurve derselben Strecke erstellt, mit der Recheneinheit aufgezeichnet und als Korrekturwert für die in kartesische Koordinaten umgerechneten GPS-Koordinaten herangezogen wird. Da die GPS-Antenne mit dem RTK-Empfänger nur ihre eigene Position vermessen kann, jedoch die exakten GPS-Koordinaten des vermessenen Gleises benötigt werden, wird der Versatz der GPS Antenne zu einer durch eine Schiene des Gleises gelegten Referenzachse ermittelt. Dieser Versatz, der sich im Zuge der Vermessung durch Vibrationen, Beschleunigung, Auswanderung von Teilen des Gleismesswagens etc. ändern kann, wird mittels des Kompensationsscanners bestimmt. Aus den GPS-Koordinaten und diesem Versatz ermittelt die Recheneinheit nun die tatsächlichen GPS-Koordinaten des zu vermessenden Gleises und wandelt diese in eine in kartesischen Koordinaten angegebene Raumkurve um. Diese Raumkurve repräsentiert den absoluten Ist-Verlauf des gemessenen Gleises. Durch Nullsetzen der z-Komponente als Höhenkomponente, wird ein Ortsbild erstellt aus dem ein Soll-Krümmungsbild ermittelt wird. Dieses Soll-Krümmungsbild repräsentiert den erwünschten Verlauf des Gleises projiziert auf die xy - Ebene. Analog wird durch Nullsetzen der x-, oder der y-Komponente ein Längsbild erstellt, aus dem ein Soll-Neigungsbild ermittelt wird, welches die gewünschten Höhenänderungen des Gleises repräsentiert. Um ein geglättetes Soll-Krümmungs-, bzw. Neigungsbild zu ermitteln, wird nun durch gemessene Datenpunkte ein Ausgleichspolynom gelegt. So können driftunabhängige Daten über den Verlauf des Gleises gewonnen werden, deren Genauigkeit nur durch das verwendete RTK-System limitiert ist. Da beispielsweise Gleisstopfmaschinen jedoch eine höhere Positionsgenauigkeit erfordern, als mittels RTK-GPS-Messung ermittelt werden kann, wird zusätzlich mit dem genaueren Inertialsystem die mittels RTK-GPS vermessene Schiene des Gleises vermessen. Dieses Inertialsystem, welches allerdings nur eine Relativposition in einem lokalen Koordinatensystem messen kann, bildet aus den Messwerten eine weitere Raumkurve, die Korrekturraumkurve, die ebenfalls den Ist-Verlauf des gemessenen Gleises repräsentiert. Die Recheneinheit kann anschließend die genaueren, aber relativen gemessenen Koordinaten des Inertialsystems mittels der absoluten, jedoch ungenaueren Koordinaten aus den RTK-GPS-Messungen in Bezug setzen und jedem gemessenen RTK-GPS-Koordinatenpunkt einen gemessenen Koordinatenpunkt des Inertialsystems zuweisen, wodurch der Drift des Inertialsystems bestimmt und herausgerechnet werden kann.

Zusätzlich kann die Bogenlänge, also die Länge der vermessenen Gleisstrecke, mittels eines Odometers aufgezeichnet werden. Wie dem Fachmann hinlänglich bekannt ist, wird für die Ermittlung der z-Koordinaten die Referenzachse durch die nicht überhöhte Schiene gelegt und für die Ermittlung der x, bzw. y-Koordinaten durch die überhöhte Schiene.

Die spezifischen Vorteile des Inertialsystems und der RTK-GPS-Koordinatenmessung lassen sich besonders gut ausnützen, wenn der Korrekturwert aus der Differenz der Ist-Werte und der Soll-Werte des Orts- und Längsbild ermittelt werden, wobei die Ist-Werte aus der vom Inertialsystem bestimmten Korrekturraumkurve und die Soll-Werte aus dem Soll-Krümmungsbild der GPS-Koordinaten gebildet werden. Da das Inertialsystem im Gegensatz zur RTK-GPS-Koordinatenmessung zwar sehr genau Lageänderungen detektieren, allerdings keine absolute Position im Raum feststellen kann, wird die Differenz aus den GPS-Koordinaten gebildeten Soll-Werte des Orts- sowie des Längsbildes mit den vom Inertialsystem erfassten Ist-Werten der Korrekturraumkurve gebildet um zum Korrekturwert zu gelangen.

Um auch in Abwesenheit von GPS-Daten eine durchgängige Vermessung zu gewährleisten, kann bei fehlenden GPS-Daten die vom Inertialsystem erstellte Korrekturraumkurve als Raumkurve herangezogen werden. Erfindungsgemäß dient die Korrekturraumkurve nur zur Korrektur der mittels der GPS-Daten erstellten Raumkurve. Ist der Empfang des GPS-Signals jedoch beispielsweise durch die Durchfahrt durch einen Tunnel erschwert, oder fällt ganz aus, kann die Korrekturraumkurve des Inertialsystems, das die Position unabhängig von externen Signalen aufzeichnet, als Raumkurve dienen, bis ein verlässlicher GPS-Empfang wiederhergestellt ist.

Um den Versatz zwischen Referenzachse und GPS-Antenne technisch einfach und zuverlässig zu vermessen, kann ein Laserscanner als Kompensationsscanner die Relativposition der GPS-Antenne zur Schiene bestimmen. Dazu wird zuerst die Ruheposition, also die Position der GPS-Antenne zur Referenzachse bei Stillstand ermittelt. Der Laserscanner emittiert ein Lasersignal und detektiert dessen Position und ist dabei dergestalt mit der GPS-Antenne verbunden, dass eine Auslenkung aus dieser Ruheposition in einer Positionsänderung des vom Laserscanner erzeugten Lasersignals führt, aus welcher der Abstand, die Auslenkung und in weiterer Folge der Versatz instantan mit hoher Genauigkeit gemessen werden kann.

Besonders vorteilhafte Konstruktionsbedingungen ergeben sich, wenn der Laserscanner zur Bestimmung der Relativposition der GPS-Antenne zur Schiene die Neigung eines Maschinenrahmens sowie dessen Abstand zum Gleismesswagen bestimmt. Die GPS-Antenne ist dabei auf dem Maschinenrahmen angeordnet. Der Laserscanner kann auf dem Maschinenrahmen angeordnet sein und emittiert seinen Lichtstrahl auf ein Raster, beispielsweise ein Lineal. Es versteht sich dabei von selbst, dass die Anordnung des Laserscanners und des Rasters dabei vertauscht sein kann. Die Position des Lasersignals auf dem Raster wird in Abhängigkeit von der Relativbewegung des Gleismesswagens zum Maschinenrahmen aufgenommen, und daraus die Höhe des Maschinenrahmens über dem Gleismesswagen, die seitliche Auswanderung des Messwagens gegenüber dem Maschinenrahmen und die Neigung des Messwagens zum Maschinenrahmen errechnet. Mit diesen Daten kann nun die Positionsänderung der Antenne gegenüber der Ruheposition bestimmt werden.

Über einem Gleismesswagen, der im Gleis geführt wird, wird eine GPS-Antenne aufgebaut. Über Sensoren werden die seitliche Auswanderung, die Querneigung und der Höhenabstand zwischen GPS-Antenne und einer durch das Gleis gelegten Referenzachse gemessen. Aus diesen Messwerten und der Höhe der GPS-Antenne über der Referenzachse kann dadurch die Lage der GPS-Antenne zur Referenzachse im Gleis genau errechnet werden. Damit können GPS-Koordinaten der Antenne auf die Gleiskoordinaten umgerechnet werden. Die GPS-Antenne ist mit einem RTK-GPS Mehrsystemempfänger verbunden. Der RTK-GPS Mehrsystemempfänger ist mit einem RTK-Korrekturdatendienst verbunden, die gemessenen Koordinaten werden an eine Recheneinheit übergeben. Erfindungsgemäß kann der Messwagen als 2-achsiger Messwagen mit fünf Freiheitsgraden und inertialer Messeinheit mit Odometer ergänzt werden. Nach Beendigung der Messfahrt wird die Spur der GPS-Koordinaten in kartesische Koordinaten umgerechnet und die Gleisgeometrie kann unter Randbedingungen bestimmt werden.

### Kurze Beschreibung der Erfindung

In der Zeichnung ist der Erfindungsgegenstand beispielsweise schematisch dargestellt. Es zeigen
- Fig. 1: Schema 3D-Gleiskoordinaten - Ermittlung des Ortsbildes und des Längsbild,
- Fig. 2: schematisch einen Gleismesswagen mit GPS-Antenne auf einem Maschinenrahmen und Kompensationsscanner,
- Fig. 3: schematisch die Projektion der Raumkurve auf die xy-Koordinatenebene und das Ist- und Sollkrümmungsbild der optimierten Gleislage mit Bogenhauptpunkten,
- Fig. 4: Die GPS-Raumkurve oder INS-Raumkurve und einen Bogenhauptpunkt mit Ausgleichspolynom M zur Ermittlung der GPS-Koordinaten,
- Fig. 5: Schema der Empfangs- und Steuerelektronik und
- Fig. 6: schematisch die Projektion der GPS-Raumkurve oder INS-Raumkurve auf die yz-Koordinatenebene (Längsbild) und die Ist- und Sollneigungen der optimierten Gleislage.

### Wege zur Ausführung der Erfindung

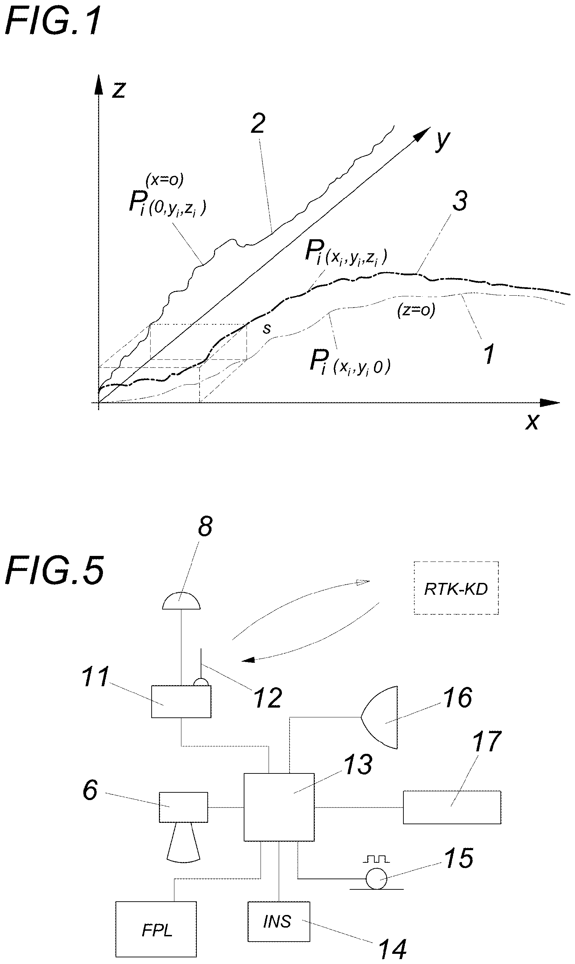

Fig. 1 zeigt schematisch die mit RTK-GPS gemessene und aufgezeichnete Raumkurve 3 mit Koordinatentripeln Pi(xi,yi,zi). Durch Nullsetzen von z erhält man die Projektion dieser Raumkurve 3 auf die xy-Ebene, das Ortsbild 1. Analog erhält man durch Nullsetzen von x die Projektion der Raumkurve 3 auf die yz-Ebene das so genannte Längsbild 2. Zu jedem der gemessenen und aufgezeichneten Koordinatentripel Pi wird die aktuelle Bogenlänge sᵢ (Gleis km) aus den GPS-Koordinaten errechnet und als Parameter mit abgespeichert.

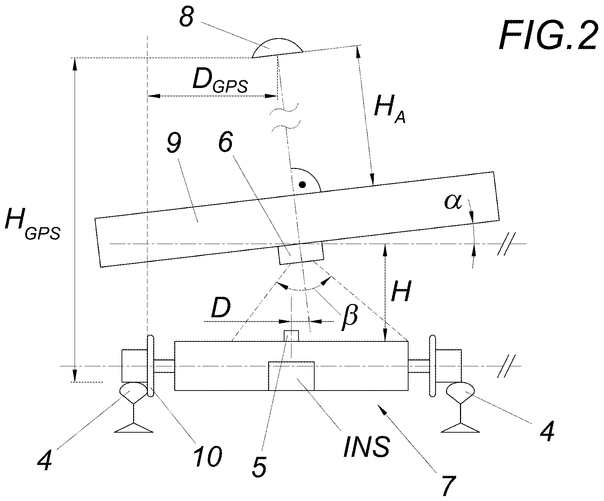

Fig. 2 zeigt erfindungsgemäß einen gleisfahrbaren Gleismesswagen 7 mit einem an die linke Schiene 4 angepressten Rad 10. Eine auf dem Maschinenrahmen 9 in der Höhe H_{A} darüber aufgebaute GPS-Antenne 8. An der Unterseite des Maschinenrahmens 9 über dem Gleismesswagen 7 befindet sich ein Laserscanner als Kompensationsscanner 6 mit Scanbereich β. Der Laserscanner scannt über ein Lineal als Raster mit Mittenmarkierung 5 welches auf dem Gleismesswagen aufgebaut ist. Aus den Scandaten kann die Höhe H des Maschinenrahmens 9 über dem Gleismesswagen 7, die seitliche Auswanderung D des Messwagens 7 gegenüber dem Maschinenrahmen (z.B. im Bogen) 9 und der Differenzwinkel α der Neigung des Messwagens zum Maschinenrahmen errechnet werden. Mit diesen Daten kann nun die Position H_{GPS}, D_{GPS} der Antenne 8 auf die Referenzschiene 10 errechnet werden. Damit kann die räumliche Spur des Gleises in GPS-Koordinaten bzw. umgerechnet in kartesischen Koordinaten angegeben werden.

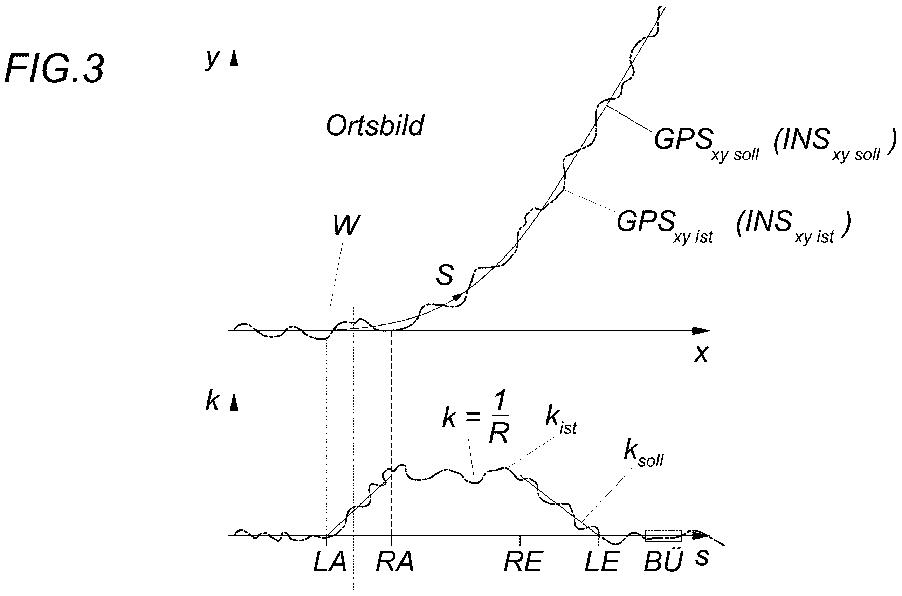

Fig. 3 zeigt schematisch im oberen Diagramm die Projektion der der GPS-Raumkurve GPS_{xyist} (oder der INS-Raumkurve INS_{xyist}) auf die xy-Ebene (das Ortsbild) 1 (strichlierte Linie). Die ausgezogene Linie zeigt die berechnete Sollgeometriekurve GPS_{xysoll} (oder INS_{xysoll}). S bezeichnet die aus den GPS-Daten der GPS-Raumkurve 3 berechneten (oder mit Odometer gemessenen) und mit abgespeicherten Bogenlänge.

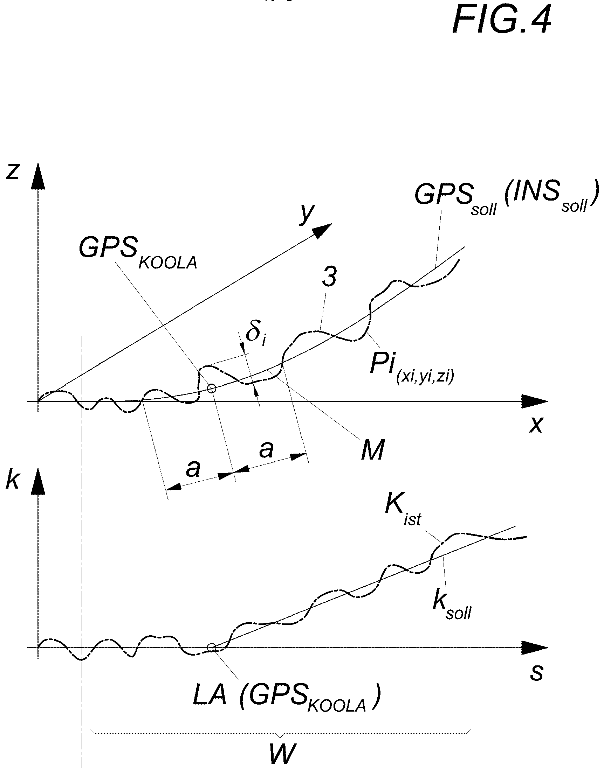

Fig. 4 zeigt im oberen Diagramm die GPS-Raumkurve 3 (oder INS-Raumkurve. Damit kann beispielsweise bei einer künftigen Instandhaltung der Gleislage die über die Optimierung definierte Absolutlage wiederhergestellt werden. Dazu wird beispielsweise über einen Bereich ±a der Raumkurve 3 ein Ausgleichspolynom M (z.B. 2. Ordnung mit a=5-10 m Länge) berechnet. Die berechnete Koordinate an der Stelle LA wird dann als Absolut-GPS-Koordinate GPS_{KOOLA} angegeben. Der Abstand dieser Soll-GPS-Koordinate zur Ist-GPS-Koordinate bei LA wird als Abweichung δᵢ berechnet. Im unteren Diagramm wird das Soll-Krümmungsbild kₛₒₗₗ und das Ist-Krümmungsbild kᵢₛₜ im Bereich des Übergangsbogenanfangs LA dargestellt. Der Punkt LA ist dann als GPS_{KOOLA} in Absolutkoordinaten bekannt.

Fig. 5 zeigt schematisch den RTK-GPS-Empfänger 11 mit GPS-Antenne 8 und einer Funkantenne 12 und die Funkverbindung mit dem RTK-Korrekturdienst RTK-KD. Der RTK-GPS-Empfänger ist mit einer Recheneinheit 13 verbunden, mit welcher ein Bildschirm 16, eine Tastatur 17, ein Kompensationsscanner 6, ein Odometer 15, eine inertiale Messeinheit INS und eine Steuer- und Regeleinheit FPL verbunden ist. Die Recheneinheit 13 errechnet aus den GPS-Daten 11 respektive den INS-Daten INS Soll-Krümmmungs- und Soll-Neigungsbilder sowie Hebe- und Richtkorrekturwerte und übergibt diese an die Steuer- und Regeleinheit FPL einer Instandhaltungsmaschine.

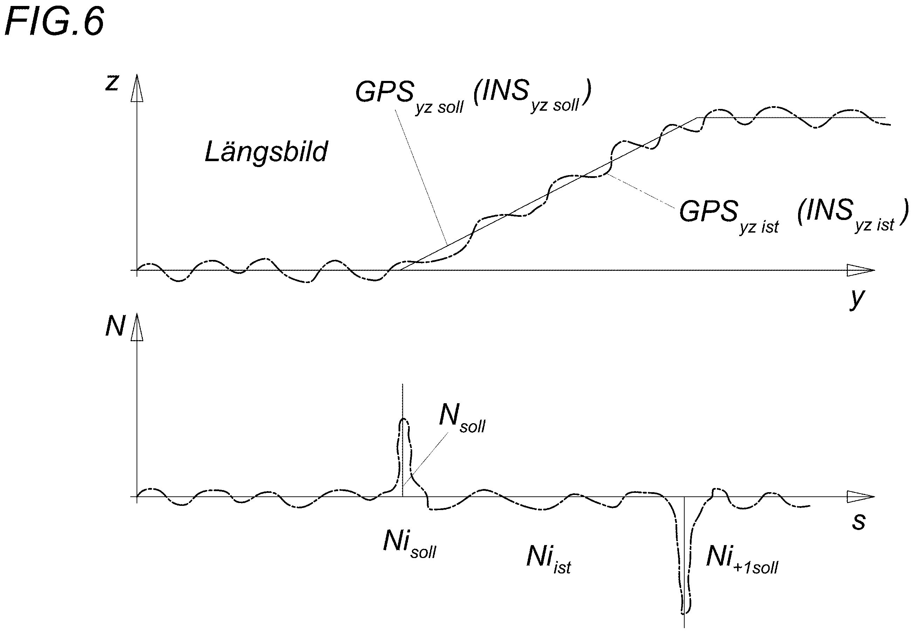

Fig. 6 zeigt schematisch im oberen Diagramm die Projektion der GPS-Raumkurve GPS_{yzist} (oder der INS_{yzist}) auf die yz-Ebene (das Längsbild) 2 als strichlierte Linie. Die ausgezogene Linie zeigt das berechnete Soll-Neigungsbild GPS_{yzsoll} (oder INS_{yzsoll}). S bezeichnet die aus den GPS-Daten der GPS-Raumkurve 3 (oder dem Odometer bei einer INS-Messung) berechneten und mit abgespeicherter Bogenlänge. Das untere Diagramm zeigt die Ist-Neigung Nᵢₛₜ aus dem Längsriss GPS_{yzist} (oder INS_{yzist}) (strichlierte Linie) und Niₛₒₗₗ die Soll-Krümmungen aus der Optimierungsrechnung (ausgezogene Linie).

## Patentansprüche

1. Verfahren zum Vermessen einer Gleislage mit einem gleisfahrbaren Gleismesswagen (7), wobei wenigstens ein Rad (10) des Gleismesswagens (7) an eine Schiene (4) angepresst wird, **dadurch gekennzeichnet, dass** eine Messfahrt mit dem gleisfahrbaren Gleismesswagen (7), einer GPS-Antenne (8) und einem RTK-GPS Empfänger (11), der mit einem RTK-Korrekturdatendienst (RTK-KD) kommuniziert, durchgeführt wird, dass die Lage der GPS-Antenne (8) bezüglich einer Referenzachse des Gleises (4, 10) mit Hilfe eines Kompensationsscanners (6) und einer Recheneinheit (13) bestimmt und die gemessenen, in kartesische Koordinaten (Pᵢ(xᵢ, yᵢ, zᵢ)) umgerechneten GPS-Koordinaten mit der Recheneinheit (13) als Raumkurve (3) aufgezeichnet werden, aus der das Ortsbild (1), aus dem ein Soll-Krümmungsbild (Kₛₒₗₗ ) und das Längsbild (2), aus dem ein Soll-Längsneigungsbild (Nₛₒₗₗ) errechnet wird, gebildet werden und dass auf dem Messwagen (7) ein Inertialsystem (INS) aufgebaut ist, mit dem eine Korrekturraumkurve derselben Strecke erstellt, mit der Recheneinheit (13) aufgezeichnet und als Korrekturwert für die in kartesische Koordinaten (Pᵢ(xᵢ, yᵢ, zᵢ)) umgerechneten GPS-Koordinaten herangezogen wird.

2. Verfahren nach Anspruch 1, **dadurch gekennzeichnet, dass** der Korrekturwert aus der Differenz der Ist-Werte und der Soll-Werte des Orts- und Längsbild ermittelt werden, wobei die Ist-Werte aus der vom Inertialsystem bestimmten Korrekturraumkurve und die Soll-Werte aus dem Soll-Krümmungsbild (Kₛₒₗₗ) der GPS-Koordinaten gebildet werden.

3. Verfahren nach Anspruch 1 oder 2, **dadurch gekennzeichnet, dass** bei fehlenden GPS-Daten die vom Inertialsystem (INS) erstellte Korrekturraumkurve als Raumkurve (3) herangezogen wird.

4. Verfahren nach einem der Ansprüche 1 bis 3, **dadurch gekennzeichnet, dass** ein Laserscanner als Kompensationsscanner (6) die Relativposition der GPS-Antenne (8) zur Schiene (4) bestimmt.

5. Verfahren nach Anspruch 4, **dadurch gekennzeichnet, dass** der Laserscanner zur Bestimmung der Relativposition der GPS-Antenne (8) zur Schiene (4) die Neigung eines Maschinenrahmens (9) sowie dessen Abstand zum Gleismesswagen (7) bestimmt.

## Claims

1. Method for measuring a track position with a track-driveable track measuring carriage (7), at least one wheel (10) of the track measuring carriage (7) being pressed against a rail (4), **characterized in that** a measurement run is carried out with the track-driveable track measuring carriage (7), a GPS antenna (8) and an RTK-GPS receiver (11), which communicates with an RTK correction data service (RTK-KD), **in that** the position of the GPS antenna (8) with respect to a reference axis of the track (4, 10) is determined with the aid of a compensation scanner (6) and a computing unit (13), and the measured GPS coordinates, which are converted into Cartesian coordinates (Pᵢ (xᵢ, yᵢ, zᵢ )), are recorded with the computing unit (13) as a space curve (3), from which the location image (1), from which a desired curvature image (Kₛₒₗₗ ) and the longitudinal image (2), from which a desired longitudinal inclination image (Nₛₒₗₗ ) are calculated, and **in that** an inertial system (INS) is set up on the measuring carriage (7), with which inertial system (INS) a correction space curve of the same distance is produced, recorded with the computing unit (13) and used as correction value for the GPS coordinates converted into Cartesian coordinates (Pᵢ (xᵢ, yᵢ, zᵢ )).

2. Method according to claim 1, **characterized in that** the correction value is determined from the difference of the actual values and the nominal values of the spatial and longitudinal image, the actual values being formed from the correction space curve determined by the inertial system and the nominal values being formed from the nominal curvature image (Kₛₒₗₗ) of the GPS coordinates.

3. Method according to claim 1 or 2, **characterized in that** in case of missing GPS data the correction space curve generated by the inertial system (INS) is used as space curve (3).

4. Method according to any of claims 1 to 3, **characterized in that** a laser scanner as compensation scanner (6) determines the relative position of the GPS antenna (8) to the rail (4).

5. Method according to claim 4, **characterized in that** the laser scanner determines the inclination of a machine frame (9) as well as its distance to the track measuring carriage (7) for determining the relative position of the GPS antenna (8) to the rail (4).

## Revendications

1. Procédé pour mesurer une position de voie avec une voiture de mesure de voie mobile sur voie (7), au moins une roue (10) de la voiture de mesure de voie (7) étant appuyée sur un rail (4), **caractérisé en ce qu'**une course de mesure est effectuée avec la voiture de mesure de voie mobile sur voie (7), une antenne GPS (8) et un récepteur GPS RTK (8) qui communique avec un service de données de correction RTK (RTK-KD), que la position de l'antenne GPS (8) est définie par rapport à un axe de référence de la voie (4, 10) à l'aide d'un scanner de compensation (6) et d'une unité de calcul (13) et les coordonnées GPS mesurées converties en données cartésiennes (Pᵢ(xᵢ, yᵢ, zᵢ)) sont enregistrées avec l'unité de calcul (13) sous la forme d'une courbe spatiale (3) à partir de laquelle sont formées l'image du site (1) à partir de laquelle une image de courbure nominale (Kₛₒₗₗ) et l'image longitudinale (2) à partir de laquelle une image d'inclinaison longitudinale nominale (Nₛₒₗₗ) sont calculées et que sur la voiture de mesure (7) est monté un système inertiel (INS) avec lequel une courbe spatiale de correction du même parcours est établie, enregistrée avec l'unité de calcul (13) et utilisée comme valeur de correction pour les coordonnées GPS converties en coordonnées cartésiennes (Pᵢ(xᵢ, yᵢ, zᵢ)).

2. Procédé selon la revendication 1, **caractérisé en ce que** la valeur de correction est déterminée à partir de la différence des valeurs réelles et des valeurs nominales des images du site et longitudinale, les valeurs réelles étant formées à partir de la courbe spatiale de correction définie par le système inertiel et les valeurs nominales à partir de l'image de courbure nominale (Kₛₒₗₗ) des coordonnées GPS.

3. Procédé selon la revendication 1 ou 2, **caractérisé en ce qu'**en cas de données GPS manquantes, la courbe spatiale de correction établie par le système inertiel est utilisée comme courbe spatiale (3).

4. Procédé selon une des revendications 1 à 3, **caractérisé en ce qu'**un scanner laser faisant office de scanner de compensation (6) détermine la position relative de l'antenne GPS (8) par rapport au rail (4).

5. Procédé selon la revendication 4, **caractérisé en ce que**, pour déterminer la position relative de l'antenne GPS (8) par rapport au rail (4), le scanner laser détermine l'inclinaison d'un châssis de machine (9) ainsi que sa distance par rapport à la voiture de mesure de voie (7).
